Europäisches Patentamt

European Patent Office

Office européen des brevets

(19)

(11) **EP 0 819 264 B1**

(12) **EUROPÄISCHE PATENTSCHRIFT**

(45) Veröffentlichungstag und Bekanntmachung des Hinweises auf die Patenterteilung:
**22.09.1999 Patentblatt 1999/38**

(21) Anmeldenummer: **96909956.3**

(22) Anmeldetag: **03.04.1996**

(51) Int Cl.⁶: **G02F 1/313**, G02B 6/12

(86) Internationale Anmeldenummer:
**PCT/DE96/00634**

(87) Internationale Veröffentlichungsnummer:
**WO 96/31800 (10.10.1996 Gazette 1996/45)**

(54) **DIGITALER OPTISCHER SCHALTER**

DIGITAL OPTICAL SWITCH

COMMUTATEUR OPTIQUE NUMERIQUE

(84) Benannte Vertragsstaaten:
**BE CH DE ES FR GB IT LI NL**

(30) Priorität: **03.04.1995 DE 19513319**

(43) Veröffentlichungstag der Anmeldung:
**21.01.1998 Patentblatt 1998/04**

(73) Patentinhaber: **Heinrich-Hertz-Institut für Nachrichtentechnik Berlin GmbH 10587 Berlin (DE)**

(72) Erfinder:
• **NOLTING, Hans-Peter D-12353 Berlin (DE)**
• **GRAVERT, Martin D-10625 Berlin (DE)**

(74) Vertreter: **Rudolph, Margit Heinrich-Hertz-Institut für Nachrichtentechnik Berlin GmbH, Gemeinsamer Patentservice, Hausvogteiplatz 5-7 10117 Berlin (DE)**

(56) Entgegenhaltungen:
**WO-A-93/17363**

• **INTEGRATED PHOTONICS REASEARCH 1994 - TECHNICAL DIGEST SERIES, Bd. 3, 17. - 19.Februar 1994, SAN FRANCISCO, CA (USA), Seiten 290-292, XP000607229 NOLTING H P ET AL: "Theoretical investigation of a tunable, narrowband, electro-optical filter with very low crosstalk and a large number of optical channels" in der Anmeldung erwähnt**
• **APPLIED PHYSICS LETTERS, 19 OCT. 1987, USA, Bd. 51, Nr. 16, ISSN 0003-6951, Seiten 1230-1232, XP002016427 SILBERBERG Y ET AL: "Digital optical switch" in der Anmeldung erwähnt**
• **IEICE TRANSACTIONS ON COMMUNICATIONS, FEB. 1994, JAPAN, Bd. E77-B, Nr. 2, ISSN 0916-8516, Seiten 204-208, XP000447112 OKAYAMA H ET AL: "8*8 Ti:LiNbO/sub 3/ waveguide digital optical switch matrix"**
• **ECIO 95 PROCEEDINGS. 7TH EUROPEAN CONFERENCE ON INTEGRATED OPTICS WITH TECHNICAL EXHIBITION DELFT, NETHERLANDS, Bd. 1, 3. - 6.April 1995, ISBN 90-407-1111-9, 1995, DELFT, NETHERLANDS, Seiten 213-216, XP000577417 NOLTING H -P ET AL: "Theoretical investigation of electro-optical switches with very low crosstalk" in der Anmeldung erwähnt**
• **IEEE PHOTONICS TECHNOLOGY LETTERS, NOV. 1995, USA, Bd. 7, Nr. 11, ISSN 1041-1135, Seiten 1294-1296, XP000537959 NOLTING H -P ET AL: "Architecture of crosstalk-reduced digital optical 2*2 switch (CRDOS)"**

**Beschreibung**

Die Erfindung bezieht sich auf einen digitalen optischen Schalter, in dem zwei asymmetrische Wellenleiter über eine kurze Wegstrecke zumindest eng benachbart verlaufend angeordnet und in einer zentralen Region bezüglich ihrer adiabatischen Kopplung elektrooptisch steuerbar ausgebildet sowie in der zentralen Region mit einer Wellenleiter-Eigenmoden beeinflussenden Gitteranordnung versehen sind.

Digitale optische Schalter -nachfolgend auch kurz "DOS" genannt - werden insbesondere in transparenten optischen Netzen benötigt. Sie -sowie andere Komponenten - sollen durchgängig optische Übermittlungswege ermöglichen, in denen optische Fasern als Übertragungsmedium im Wellenlängenbereich von ca. 1,3 µm bis 1,6 µm eine gleichzeitig für mehrere Kanäle nutzbare Übertragungsbandbreite von insgesamt etwa 50 THz bereitstellen. Die beispielsweise in Multiplexern/ Demultiplexern einzusetzenden sowie zu Schaltmatrizen in Vermittlungs- oder Verteilerstellen zusammenzufassenden optischen Schalter sollen weitestgehend unabhängig von der Polarisation und der Wellenlänge sein, als integrierbare Komponenten eine kurze Baulänge und außerdem geringe Verluste und möglichst geringes Nebensprechen aufweisen.

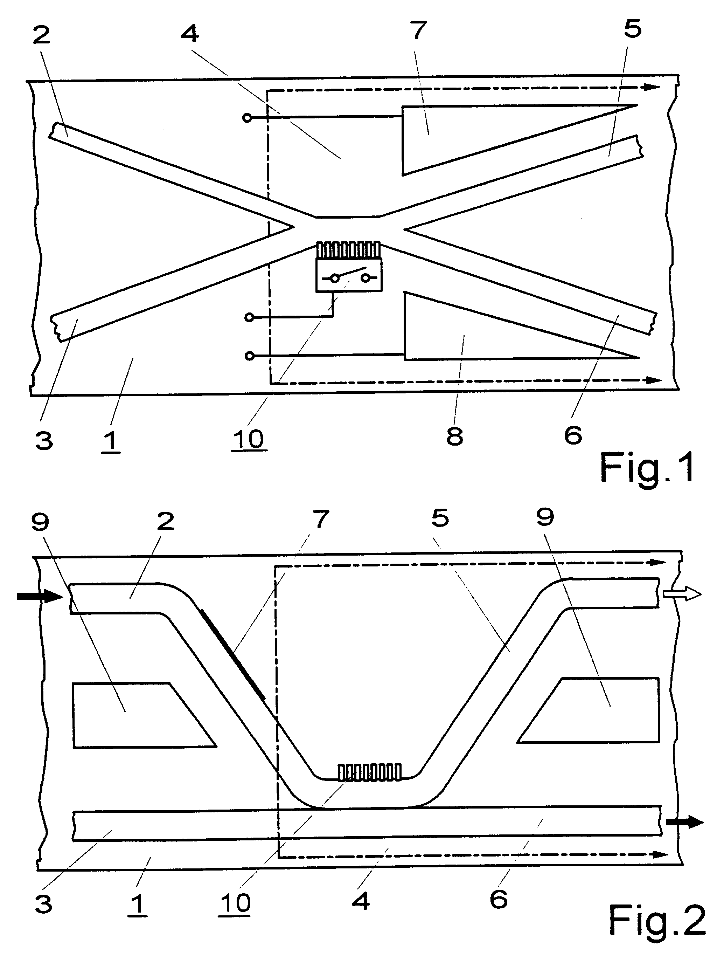

Ein digitaler optischer Schalter der eingangs genannten Art ist aus der WO 93/17363 A1 insoweit bekannt, als dort die zentrale Region von einem bimodalen Wellenleiter gebildet wird, der eine Modenkonversion bewirkt und dazu periodische Querschnittsänderungen und eine einzige Elektrode aufweist, und zudem mit asymmetrischen Y-Abzweigen auf der Ausgangs- und/oder Eingangsseite versehen sein kann (vgl. a.a.O. Fig. 1 sowie Beschreibungsseite 13, Zeilen 4 bis 12). Die Funktion dieses bekannten optischen Schalters beruht darauf, eine Konversion der Moden nullter und erster Ordnung stattfinden zu lassen oder nicht. Auf diese Weise lassen sich Ein-/ Ausschalter oder Richtungskoppler realisieren.

Eine andere Art digitaler optischer Schalter ist aus: "Appl. Phys. Lett." 51 (16), Oktober 1987, Seiten 1230 bis 1232 bekannt. Bei einem viertorigen digitalen optischen Schalter lassen sich danach die sich kreuzenden asymmetrischen Wellenleiter zwischen Eingang und Kreuzungsbereich mit unterschiedlicher Breite und zwischen Kreuzungsbereich und Ausgang mit gleicher Breite, aber optoelektrisch in der zentralen Region bezüglich ihrer Brechzahl steuerbar ausbilden. Damit die adiabatische Kopplung nicht unterbrochen wird, können die zur elektrooptischen Steuerung dienenden Elektroden so geformt sein, daß sich die einwirkenden elektrischen Felder allmählich ändern.

Die Funktion eines DOS in X-Struktur, der auf dem Prinzip adiabatischer asymmetrischer Y-Abzweige beruht, besteht somit darin, daß die Lichtwelle, die in einem Lichtwellenleiter im Eingangsbereich geführt wird, in der zentralen Region nur in denjenigen Wellenleiterzweig gelangt, in dem die gleichen Bedingungen für die Ausbreitung dieser Lichtwelle herrschen. Lassen sich die Ausbreitungseigenschaften der zu den Ausgängen führenden Wellenleiterzweige also jeweils auf die Ausbreitungseigenschaften des einen oder des anderen Eingangs-Wellenleiterzweiges einstellen, können die in den X-DOS eingespeisten Lichtwellen - auch simultan - zum einen oder anderen Ausgang gelenkt werden. Er weist zudem ausgezeichnete Eigenschaften hinsichtlich Polarisations-, und Wellenlängenunabhängigkeit auf, erfüllt jedoch nicht ohne weiteres die besonders hohen Anforderungen an das in transparenten optischen Netzen zulässige Nebensprechen. Eine Nebensprechdämpfung von 20 dB, unter günstigen Umständen 30dB, reicht nicht aus, wenn ein optisches Signal beispielsweise 100 kaskadierte Stufen zu durchlaufen hat. Hierzu sind 40 dB - und zwar unter den im ungünstigsten Fall auftretenden Umständen - je Stufe erforderlich

Bei anderen Methoden, z.B. der "totalen inneren Reflexion" (TIR = total internal reflection) und der "Zwei-Moden-Interferenz" (TMI = two mode interference), mit denen sich die Nebensprechdämpfung eines DOS verbessern lassen könnte, ist folgendes zu berücksichtigen:

Bei diesen beiden Methoden sind ohnehin schon die gewünschte Polarisations- und die Wellenlängenunabhängigkeit nicht gegeben.

Nach der TIR-Methode wären zwar die Voraussetzungen für kurze Baulängen und insbesondere für besonders geringes Nebensprechen gegeben, doch ist mit vergleichsweise hohen Verlusten zu rechnen, sofern überhaupt ein Material verfügbar wäre, das einen bei dieser Methode benötigten Brechzahlunterschied $\Delta n_{EO}$ von etwa 0,3 ermöglicht.

Die TMI-Methode läßt sich hingegen mit verfügbaren Materialien realisieren und auch geringe Verluste erwarten, bedingt aber große Baulängen und eine präzise Leistungsteilung, die von engen, im Fabrikationsprozeß einzuhaltenden Toleranzen abhängig ist.

Überraschenderweise bietet ein andersartiger Ansatzpunkt eine Lösung für das der Erfindung zugrundeliegende technische Problem. In der DE 44 04 777 A 1 vom 10.02.94 ist ein Stellglied zum Beeinflussen von Lichtstrahlen in optischen Wellenleitern offenbart, über das bereits anläßlich der Konferenz: "Integrated Photonics Research 1994", 17. bis 19. Februar 1994 in San Francisco, CA (USA) berichtet wurde (vgl. H.-P. Nolting, M. Gravert: "Theoretical Investigation of a Tunable, Narrowband, Electro-Optical Filter with Low Crosstalk and a Large Number of Optical Channels", Technical Digest Series, Vol 3 (Optical Society of America, Washington, DC, 1994) Seiten 290 bis 292 bzw. FB 3-1 bis FB 3-3). Dieses Stellglied sieht individuelle Muster vor, die jeweils einer bestimmten Wellenlänge innerhalb eines Spektralbereichs zugeordnet sind. Damit läßt sich das Stellglied auf bestimmte Betriebsbedingungen einstellen und z.B. für Lichtstrahlen einer bestimmten Wellenlänge eine Modenkonversion durchführen.

Die erfindungsgemäße Lösung sieht bei einem digitalen optischen Schalter der eingangs genannten Art vor, die Wellenleiter, zu ihrer elektrooptisch steuerbaren adiabatischen Kopplung dienende Elektroden und die Wellenleiter-Eigenmoden beeinflussende Gitteranordnung als im wesentlichen vertikale, d.h. übereinander angeordnete Schichten auf einem Substrat auszubilden. Die Gitteranordnung ist als zusätzliche Struktur zwischen den asymmetrischen Wellenleitern angebracht und dient einzig und allein der Anpassung der Amplitude und Phase der Wellenleiter-Eigenmoden.

Der erfindungsgemäßen Lösung liegen die nachfolgend aufgezeigten Überlegungen und Erkenntnisse zugrunde:

• Für Wellenleiter-Eigenmoden gilt allgemein:

$$\begin{pmatrix} E_+ \\ E_- \end{pmatrix} = \begin{pmatrix} \cos\Theta \\ \sin\Theta \cdot e^{j\varphi} \end{pmatrix} \qquad \tan\Theta = \left| \frac{E_-}{E_-} \right|$$

Dabei bedeuten:

$E_+$, $E_-$ : Amplitudenmaß der beiden Wellenleiter-Eigenmoden
$\Theta$ : Amplitudenverhältnis
$\varphi$ : Phasenwinkel
$j = \sqrt{-1}$

• Ein viertoriger DOS kann als ein aus zwei Y-Verzweigungen zusammengesetztes Gebilde betrachtet werden, das jeweils zwei einmodige Eingänge und Ausgänge und eine gemeinsame zweimodige Verbindung aufweist.

•• Für eine in einen Eingang eingespeiste Lichtwelle erhält man im Gebiet der zweimodigen Verbindung eine Linearkombination der beiden Moden, die durch das Amplitudenverhältnis $\Theta$ beschrieben sind, mit dem Phasenwinkel $\varphi_{in}$.
•• Für einen Ausgang, an dem keine Lichtwelle erscheinen soll, existiert nach dem Gesetz der Reziprozität eines passiven optischen Bauelements stets eine Linearkombination $\Theta_{out,o}$ mit $\varphi_{out,o}$, für die das Nebensprechen $P_{crosstalk}$ Null ist,

$$P_{crosstalk} = f(\Theta_{out,o}, \varphi_{out,o}) = 0$$

•• Daraus folgt für die Erfindung, daß im Gebiet der zweimodigen Verbindung eine Anpassung gemäß

$$\Theta_{in} = \Theta_{out,o}, \text{ und } \varphi_{in} = \varphi_{out,o}$$

herbeigeführt werden muß. Diese Anpassung kann durch einen elektrooptischen Modentransformator erreicht werden.

Auf diese Weise können zwar die für das unerwünschte Nebensprechen verantwortlichen Ursachen nicht beseitigt werden, lassen sich jedoch als erkannt in ihren Folgeerscheinungen wirksam beeinflussen. Die Hauptursachen des Nebensprechens liegen z.B. in Krümmungen und Querschnittsänderungen der Wellenleiter, in Sprüngen ihres Brechzahlprofils, in auf die Wellenleiter einwirkenden Elektroden und dergleichen, die eine Konversion zwischen erster und zweiter Wellenleiter-Eigenmode in der zentralen Region eines zweimodigen DOS bewirken. Die erfindungsgemäße Gitteranordnung paßt Amplitude und Phase der Wellenleiter-Eigenmoden -zusätzlich zur normalen adiabatischen Kopplung der im Bauelement geführten Lichtwellen - jeweils an den Ausgang des Y-Abzweigs an. Darüber hinaus ist im Vergleich mit einem DOS ohne die Wellenleiter-Eigenmoden kompensierende Gitteranordnung ein Anstieg der Signalamplitude festzustellen, der darauf zurückzuführen ist, daß ein Energietransfer von einer zur anderen Mode stattfindet. Damit stellt sich das Ergebnis der erfindungsgemäßen Lösung als "Kaskadierung" zweier unterschiedlicher physikalischer Effekte dar, von denen jeder mit mindestens 20 dB zum Gesamtergebnis einer Nebensprechdämpfung von 40 dB und besser beiträgt.

In Anlehnung an den zuvor schon genannten Stand der Technik mit lateralen Strukturen läßt sich bei bevor-

EP 0 819 264 B1

zugten Ausbildungsformen der Erfindung die Wellenleiter-Eigenmoden beeinflussende Gitteranordnung als elektrooptische, wahlfrei ansteuerbare Elektrodenstruktur auslegen. Alle diese Ausbildungsformen sind baugleich im Querschnitt und lassen sich auf unterschiedliche Nennwerte eines Betriebsparameters individuell entweder fest einstellen oder sogar bei wechselnden Nennwerten nachstimmen. Es können große Herstellungstoleranzen zugelassen werden, die sich durch die Programmierung der Beschaltungsmuster der Elektroden ausgleichen lassen.

Eine derartige Ausbildungsform der Elektrodenstruktur weist vier Elektrodenstreifen je Periode auf und umfaßt mindestens eine Periode. Die vier Elektrodenstreifen haben eine Breite von kleiner $\lambda/4$, um die Phasen frei einstellen zu können. Es können jedoch auch zwei Elektrodenstreifen mit einer Breite von kleiner $\lambda/2$ vorgesehen sein, die gegenüber der zuvor genannten Vier-Elektroden-Konfiguration mit doppelt so hohen Spannungen betrieben werden.

Da der Modenkonverter als Korrekturglied eingesetzt wird und daher nur geringe Amplitudenänderungen von wenigen % nötig sind, werden im Gegensatz zu Filteranordnungen nur wenige (1 ... 2) Perioden benötigt. Ein Bauelement mit einem solchen Korrekturglied ist daher auch breitbandig.

Die erfindungsgemäßen Ausbildungsformen ermöglichen aufgrund der im wesentlichen vertikalen Schichten auf einem Substrat die Baulänge, die im wesentlichen für die adiabatische Kopplung erforderlich ist, zu verkürzen und die Integrierbarkeit zu begünstigen. Auf der Basis von InP-Material können die beiden Wellenleiter für 1,3 um aus quaternären Materialien mit einem $\Delta n_{EO}$ von 0,03 ausgebildet sein. Die Baulänge eines solchen X-DOS liegt dann unter 1000 um, so daß Wafer mit 2 Zoll = 50,8 mm Durchmesser z.B. eine 32 x 32-Schaltmatrix aufnehmen können.

In dieser Technologie mit im wesentlichen vertikalen Schichten auf einem Substrat ist auf einfache Weise eine die Wellenleiter-Eigenmoden beeinflussende Gitteranordnung realisierbar, die als fest vorgegebene digitale Oberflächenstruktur desjenigen Wellenleiters ausgebildet sein kann, der sich oberhalb des anderen Wellenleiters befindet. Eine solche Ausbildungsform der Erfindung, die übrigens bezüglich ihrer erforderlichen Baulänge einer elektrooptisch ansteuerbaren Elektrodenstruktur entspricht, weist auch hinsichtlich der Bandbreite und damit der Einsatzmöglichkeiten vergleichbare Vorzüge auf.

Einer weiteren Variante der erfindungsgemäßen digitalen optischen Schalter und deren bevorzugter Ausbildungsformen ist ebenfalls eine eigene erfinderische Bedeutung beizumessen. Bei dieser Variante weisen die Wellenleiter außerhalb der Wegstrecke, in der sich die Wellenleiter-Eigenmoden beeinflussende Gitteranordnung befindet, mindestens einen die Richtung ihres Verlaufs parallel versetzenden, als Phasenschieber wirkenden Abschnitt mit einer Länge von $\lambda/4$ auf Die dadurch -rein passivherbeigeführte Phasenverschiebung führt zu einer Rückwärtskopplung anstelle der sonst stattfindenden Vorwärtskopplung und ermöglicht somit, die Baulänge erheblich zu reduzieren.

In einer weiteren Anwendung der Erfindung mit eigener erfinderischer Bedeutung ist in einer aus drei Wellenleiterzweigen bestehenden Y-Struktur die zentrale Region über einen Modentaper mit einem den einzelnen Wellenleiterzweig bildenden passiven Wellenleiter verbunden.

Aus derartigen Schaltern lassen sich Schaltmatrizen für Verteilsysteme bilden. Das physikalische Prinzip des Modenanpassens für die Reduzierung des Nebensprechens ist analog zum X-DOS. Die relativen Amplituden und die Phasen von erster und zweiter Mode müssen vom Beginn der zentralen Region bis zu den Enden der beiden anderen Wellenleiterzweige der Y-Struktur am Interface zwischen dem Ende der zentralen Region und dem Beginn der genannten beiden Wellenleiterzweige so angepaßt sein, daß das Übersprechen kleiner ist als die vorgegebene Schranke, z.B. - 40 dB.

Besonders günstig ist es bei der vorgenannten Anwendung, wenn die beiden, die anderen Wellenleiterzweige der Y-Struktur bildenden Wellenleiter an ihren die Ausgänge bildenden Enden mit passiven Sektionen versehen sind, die in ihrer Lichtleitungseigenschaft mit der des passiven einzelnen, den Eingang bildenden Wellenleiters identisch sind. Hierdurch wird eine Kaskadierbarkeit von Y-DOS-Komponenten zu größeren Matrizen, insbesondere in integrierter Bauweise. auf einfache Weise ermöglicht.

Weiterhin ist bei dieser Anwendung im Hinblick auf die hohe Flexibilität zu kompensierender Abweichungen vorgesehen, den Modentaper symmetrisch auszubilden. Er erzeugt dann nur die erste Mode, die Schaltzustände der elektrooptischen Gitteranordnung sind den jeweiligen Gegebenheiten entsprechend neu zu konfigurieren. Dazu lassen sich entweder die Spannungswerte der einzelnen Elektroden in der zentralen Region bestimmen oder die Seiten der Elektroden vertauschen, da sich die Phasendifferenzen um $\Pi$ unterscheiden.

Bei allen diesen Ausführungsformen ist es zweckmäßig, zwischen dem Modentaper und der zentralen Region ein Splittingtaper anzuordnen. Derartige Splittingtaper verringern die optischen Verluste für die Lichtwellen, die der Modenkonversion und der adiabatischen Kopplung unterzogen werden.

Die Zeichnungen geben schematisch die erfindungswesentlichen strukturellen Ausbildungen für die Realisierung von digitalen optischen Schaltern der erfindungsgemäßen Art sowie in einem Schaubild das Ausmaß der Reduzierung des Nebensprechens wieder. Es zeigen:

Fig. 1:  einen X-DOS mit asymmetrischen, sich kreuzenden Wellenleitern und einer Gitteranordnung im Kreuzungsbereich, mit der Wellenleiter-Eigenmoden beeinflußbar sind;

Fig. 2:  einen X-DOS, ähnlich Fig. 1, jedoch mit im wesentlichen vertikalen Schichten auf einem Substrat, und mit sich über eine kurze Wegstrecke berührenden Wellenleitern;

Fig. 3: einen X-DOS, ähnlich Fig. 1 oder 2, mit entlang einer kurzen Wegstrecke eng benachbart geführten Wellenleitern, die außerhalb dieser Wegstrecke als passive Phasenschieber wirkende Abschnitte der Länge $\lambda/4$ aufweisen;

Fig. 4: die Struktur einer Gitteranordnung zur Beeinflussung der Wellenleiter-Eigenmoden und ein Funktionsschaubild für den Verlauf des Amplitudenverhältnisses $\Theta$ in Abhängigkeit des Beschaltungsmusters von Elektrodenstreifen;

Fig. 5: den Verlauf der Leistung P[dB] des Signals sowie des Nebensprechens über der Baulänge z[μm] digitaler optischer Schalter, und

Fig. 6: einen Y-DOS mit einer Gitteranordnung in der zentralen Region.

Der in Fig. 1 gezeigte digitale optische Schalter **1** - "DOS" - ist aus asymmetrischen Wellenleitern **2**, **3**, **5**, **6** aufgebaut. Die Asymmetrie ist hier sowohl zwischen den Wellenleitern 2 und 3 als auch zunächst zwischen den Wellenleitern **2** und **5** bzw. **2** und **6** und den Wellenleitern **3** und **5** bzw. **3** und **6** gegeben, indem sich z.B. die Querschnitte der Wellenleiter **2** und **3** untereinander sowie gegenüber den identischen Querschnitten der Wellenleiter **5** und **6** unterscheiden. Die Ausbreitungseigenschaften der Wellenleiter **5** und **6** lassen sich mittels Elektroden **7**, **8** beeinflussen, indem elektrooptisch deren Brechzahl n z.B. auf $n+\Delta n_{EO}$ erhöht oder auf $n-\Delta n_{EO}$ verringert wird. Auf diese Weise kann eine in den Wellenleiter **2** eingespeiste Lichtwelle entweder in den Wellenleiter **5** oder den Wellenleiter **6** und simultan eine andere, in den Wellenleiter **3** eingespeiste Lichtwelle in den Wellenleiter **6** oder **5** gelangen.

Die Funktion eines solchen DOS beruht auf dem Prinzip adiabatischer Kopplung in einer zentralen Region **4** und ist als solche bekannt.Das Nebensprechen liegt bei insoweit bekannten photonischen Komponenten etwa bei -20 dB, in günstigen Fällen bei -30 dB, und reicht nicht aus, wenn mehrere DOS **1** z.B. in Schaltmatrizen kaskadiert werden sollen.

Ein derartiger DOS **1** ist in seiner zentralen Region **4** - hier und nachfolgend beispielhaft immer in Ausbreitungsrichtung der Lichtwellen gesehen am Eingangsbereich der zentralen Region **4** - mit einer Gitteranordnung **10** versehen, mit der die Wellenleiter-Eigenmoden beeinflußt werden. Die Beeinflussung besteht darin, Amplitude und Phase der Wellenleiter-Eigenmoden so aufeinander anzupassen, daß deren Amplituden- und Phasenverhältnis an den Ausgängen des DOS **1** jeweils 1 ist. Die Gitteranordnung **10** und die Wellenleiter **5** und **6** stellen somit einen Modentransformator dar, der das Nebensprechen, dessen Hauptursachen in der Konversion zwischen beiden Wellenleiter-Eigenmoden liegt, drastisch reduziert. Die auf diese Weise herbeigeführte Reduktion des Nebensprechens um mindestens -20 dB überlagert sich als unabhängiger physikalischer Effekt dem Nebensprechen von etwa -20 dB bei der adiabatischen Kopplung, so daß insgesamt ein Nebensprechen bei digitalen optischen Schaltern gemäß der Erfindung und ihrer Ausbildungsformen von besser als -40 dB erreicht wird.

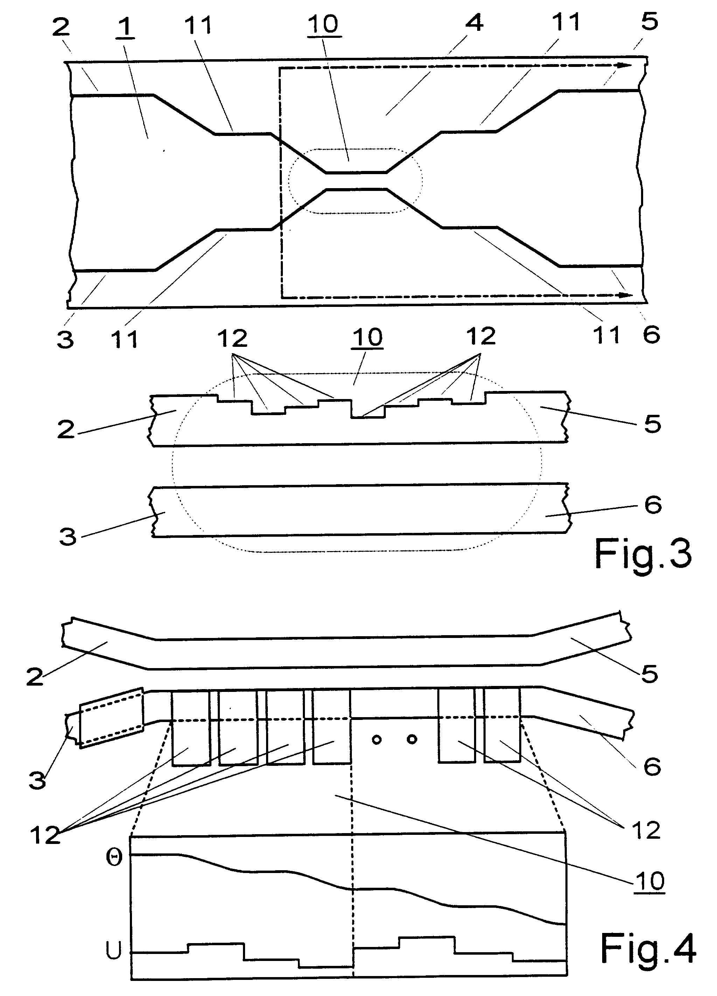

Die Gitteranordnung **10** ist in Fig. 1 als elektrooptische, wahlfrei ansteuerbare Elektrodenstruktur angedeutet und wird im Zusammenhang mit den Erläuterungen zu Fig. 4 noch näher beschrieben. Bereits jetzt ist jedoch darauf hinzuweisen, daß die Gitterstruktur **10** jeweils 4 Elektrodenstreifen pro Periode aufweisen muß und im allgemeinen eine Periode oder zwei Perioden benötigt. Damit ergibt sich für die Gitteranordnung **10** in konstruktiver Hinsicht eine Baulänge von z.B. nur 2x4x $\lambda/4 = 2\lambda$ und in funktioneller Hinsicht hervorragende Breitbandigkeit.

Der in Fig. 2 dargestellte DOS **1** ist als eine photonische Komponente mit in wesentlichen aus vertikal auf einem Substrat ausgebildeten Schichten aufgebaut. Eine derartige Bauweise bietet Vorteile sowohl in der Herstellung im Vergleich zur Ausbildung lateraler Strukturen als auch für manche Teilbereiche solcher Komponenten bezüglich kürzerer Baulängen. Darüber hinaus sind in Fig. 2 und Fig. 3 einige Besonderheiten aufgezeigt, die sich im Bedarfsfall auf andere Ausbildungsformen der Erfindung übertragen lassen.

So läßt sich ein DOS **1** gemäß Fig. 2 als Umschalter ausbilden. Von den Wellenleitern **2** und **3** auf der Eingangsseite des DOS **1** wird nur einer benutzt. Die dort zugeführte Lichtwelle gelangt entweder in den Wellenleiter **5** oder den Wellenleiter **6** auf der Ausgangsseite des DOS **1**. Beide Wellenleiterzüge **2/5** bzw. **3/6** haben identische und konstante Querschnitte, sie unterscheiden sich jedoch um ein $\Delta n$ hinsichtlich der Brechzahlen $n_1$ und $n_2$. Mittels einer Elektrode 7, die den Wellenleiter **2** mit der Brechzahl $n_1$ teilweise bedeckt, kann dort elektrooptisch die Brechzahl um $\Delta n_{EO}$ auf $n_2$ verringert werden. In diesem Fall gelangt die dem Wellenleiter **2** zugeführte Lichtwelle in den Wellenleiter **6** mit der Brechzahl $n_2$. Anderenfalls bleibt die Brechzahl $n_1$ im Wellenleiterzug **2/5** konstant, d.h. die dem Wellenleiter **2** zugeführte Lichtwelle tritt über den Wellenleiter **5** aus.

Die Gitteranordnung **10** in der zentralen Region **4** - auch hier wieder nur im Hinblick auf die Fig. 4 und die zugehörigen Erläuterungen nur angedeutet - kann im selben Prozeßschritt mit der Elektrode **7** ausgebildet werden. Zwischen den Wellenleitern **2** und **3** sowie **5** und **6** läßt sich eine Verlustschicht **9** vorsehen, die unerwünschte Nebenwirkungen reduziert.

Der in Fig. 3 dargestellte DOS **1** weist weitere Besonderheiten auf Zunächst ist kenntlich gemacht, daß sich die Wellenleiterzüge **2/5** und **3/6** weder kreuzen noch berühren, dann jedoch über eine kurze Wegstrecke eng benachbart verlaufend angeordnet sein müssen. Weiterhin kann bei Ausbildungsformen der Erfindung, bei denen das Nebensprechen unabhängig von beiden möglichen Schaltzuständen des DOS **1** ist, die Gitterstruktur **10** als passives Element, d.h. als fest vorgegebene digitale Oberflächenstruktur ausgebildet sein. Bei einem Aufbau des DOS **1** mit im wesentlichen vertikalen Schichten ist es vorteilhaft, diese Oberflächenstruktur auf demjenigen Wellenleiter bzw. Wellenleiterzug auszubilden, der sich oberhalb des anderen Wellenleiters bzw. Wellenleiterzuges befindet. Auch eine derartige Oberflächenstruktur als Gitteranordnung **10** in der zentralen Region 4 eines DOS **1** weist je Periode vier Stufen auf (die Stufen entsprechen Elektrodenstreifen **12** einer elektrooptischen Gitteranordnung, wie der vergrößert dargestellte Ausschnitt erkennen läßt), benötigt wenige Perioden, insbesondere eine oder zwei, und ist breitbandig. Wird ein schmalbandigerer Arbeitsbereich gewünscht, muß die Periodenanzahl und damit die Baulänge erhöht werden.

Schließlich zeigt die Fig. 3 noch, daß die Wellenleiter **2**, **3**, **5**, **6** jeweils außerhalb der Wegstrecke, in der sich die Wellenleiter-Eigenmoden beeinflussende Gitteranordnung **10** befindet, mindestens einen Abschnitt **11** aufweisen können, der die Richtung ihres Verlaufs parallel versetzt und jeweils eine Länge von $\lambda/4$ besitzt. Ein derartiger Richtungsversatz bewirkt eine Phasenverschiebung, so daß statt einer Vorwärts- eine Rückwärtskopplung stattfindet.

Fig. 4 zeigt sowohl einen Ausschnitt eines DOS **1** mit detaillierterer Darstellung einer elektrooptischen, wahlfrei ansteuerbaren Gitteranordnung **10** als auch in einem Schaubild den Verlauf des Amplitudenverhältnisses $\Theta$ der verkoppelten Wellenleiter-Eigenmoden und ein diesen Verlauf bewirkendes Beschaltungsmuster der Elektrodenstreifen **12**. Die Gitteranordnung **10** befindet sich im Wellenleiterzug 5/6 z.B. am Beginn der zentralen Region **4**. Je vier Elektrodenstreifen **12** bilden eine Periode. Es werden nur zwei Perioden benötigt. Das digitale Beschaltungsmuster der Elektrodenstreifen setzt sich aus insgesamt beispielsweise vier Potentialstufen U zusammen. Mit jeder Stufe verbessert sich die Anpassung der Wellenleiter-Eigenmoden.

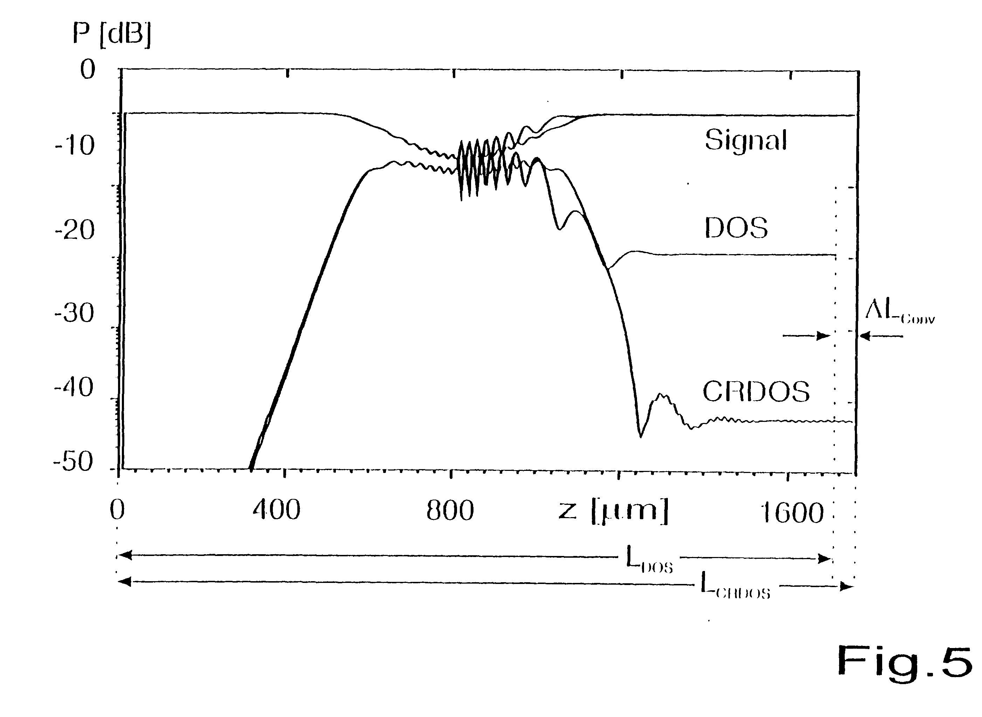

Die in Fig. 5 dargestellten Kurvenverläufe der Leistung P - in dB - über der Länge z -in µm- der Baulänge digitaler optischer Schalter zeigen folgendes: Die zentrale Region **4** beginnt in einer Entfernung von ca. 800 µm von der Eingangsseite. Das Signal weist am Ausgang dieselbe Leistung wie am Eingang auf. Bei einem DOS herkömmlicher Art, dessen Baulänge bei 1700 µm liegt, beträgt das Nebensprechen - 20 dB. Ein digitaler optischer Schalter mit reduziertem Nebensprechen (crosstalk reduced digital optical switch - CRDOS) gemäß der Erfindung erreicht eine Nebensprechdämpfung von mehr als 40 dB durch das als Konverter für Wellenleiter-Eigenmoden vorgesehene Korrekturglied. Mit der für diesen Konverter benötigten Baulänge $\Delta L_{conv}$ wird die Baulänge $L_{CRDOS}$ nur um etwa 3 % größer als die Baulänge $L_{DOS}$.

Anläßlich der "7th European Conference on Integrated Optics" ECIO '95, Technische Universität Delft (NL), vom 3. bis 6. April 1995 wurde über digitale optische Schalter der erfindungsgemäßen Art in X-Struktur berichtet (Paper # Tu A4, Seiten 213 bis 216).

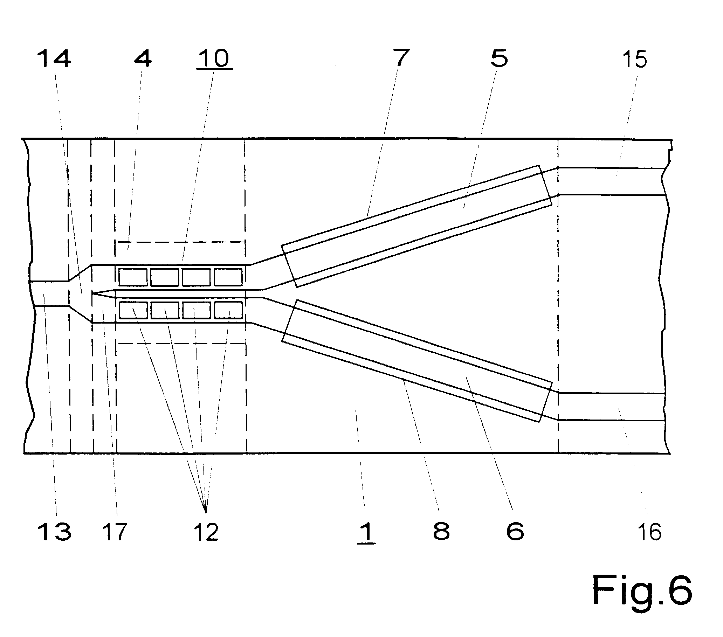

In Figur 6 ist ein digitaler optischer Schalter **1** - DOS - in Y-Struktur dargestellt. An der Eingangsseite ist der Wellenleiterzweig, der zur zentralen Region **4** mit der Gitteranordnung **10** führt, aus einem passiven Wellenleiter **13** gebildet. Zwischen ihm und den Wellenleitern **5**, **6** mit den Elektroden **12** der Gitteranordnung **10** befindet sich ein symmetrisch ausgebildeter Modentaper **14**. Dieser erzeugt die erste Mode. Die zweite Mode entsteht je nach Beschaltungsmuster der Elektroden **12**. Zwischen dem Modentaper **14** und der zentralen Region **4** ist zur Verringerung optischer Verluste sein Splittingtaper **17** angeordnet.

Die Funktion des digitalen optischen Schalters **1** in den sich verzweigenden beiden Wellenleitern **5**, **6** wird durch die Beschaltung der Elektroden **7**, **8** bewirkt. An ihren Enden weisen die beiden Wellenleiter **5**, **6** passive Sektionen **15**, **16** auf, die in ihrer Lichtleitungseigenschaft mit der des Wellenleiters **13** identisch sind. Derartige Strukturen lassen sich auf diese Weise direkt aneinanderschalten und ermöglichen die Ausbildung kaskadierter Matrizen, insbesondere in integrierter Technik.

## Patentansprüche

1. Digitaler optischer Schalter, in dem zwei asymmetrische Wellenleiter (2, 3, 5, 6) über eine kurze Wegstrecke zumindest eng benachbart verlaufend angeordnet und in einer zentralen Region (4) bezüglich ihrer adiabatischen Kopplung elektrooptisch steuerbar ausgebildet sowie in der zentralen Region (4) mit einer Wellenleiter-Eigenmoden beeinflussenden Gitteranordnung (10) versehen sind,
**dadurch gekennzeichnet**, daß
die Wellenleiter (2, 3, 5, 6), die zu ihrer elektrooptisch steuerbaren adiabatischen Kopplung dienenden Elektroden (7) und die Wellenleiter-Eigenmoden beeinflussende Gitteranordnung (10) als im wesentlichen übereinander angeordnete Schichten auf einem Substrat ausgebildet sind.

2. Digitaler optischer Schalter nach Anspruch 1,
**dadurch gekennzeichnet**, daß
die Wellenleiter-Eigenmoden beeinflussende Gitteranordnung (10) als elektrooptische, wahlfrei ansteuerbare Elektrodenstruktur ausgelegt ist.

EP 0 819 264 B1

**3.** Digitaler optischer Schalter nach Anspruch 2,
**dadurch gekennzeichnet**, daß
die Elektrodenstruktur jeweils vier Elektrodenstreifen (12) je Periode und mindestens eine Periode umfaßt.

**4.** Digitaler optischer Schalter nach Anspruch 1,
**dadurch gekennzeichnet**, daß
die Wellenleiter-Eigenmoden beeinflussende Gitteranordnung (10) als fest vorgegebene, digitale Oberflächenstruktur (12) desjenigen Wellenleiters (2, 5) ausgebildet ist, der sich oberhalb des anderen Wellenleiters (3, 6) befindet.

**5.** Digitaler optischer Schalter nach einem der Ansprüche 1 bis 4,
**dadurch gekennzeichnet**, daß
die Wellenleiter (2, 3, 5, 6) außerhalb der Wegstrecke, in der sich die Wellenleiter-Eigenmoden beeinflussende Gitteranordnung (10) befindet, mindestens einen die Richtung ihres Verlaufs parallel versetzenden, als Phasenschieber wirkenden Abschnitt (11) mit einer Länge von $\lambda/4$ aufweisen.

**6.** Digitaler optischer Schalter nach einem der Ansprüche 1 bis 5,
**dadurch gekennzeichnet**, daß
in einer aus drei Wellenleiterzweigen bestehenden Y-Struktur die zentrale Region (4) über einen Modentaper (14) mit einem den einzelnen Wellenleiterzweig bildenden passiven Wellenleiter (13) verbunden ist.

**7.** Digitaler optischer Schalter nach Anspruch 6,
**dadurch gekennzeichnet**, daß
die beiden, die anderen Wellenleiterzweige der Y-Struktur bildenden Wellenleiter (5, 6) an ihren die Ausgänge bildenden Enden mit passiven Sektionen (15, 16) versehen sind, die in ihrer Lichtleitungseigenschaft mit der des passiven einzelnen, den Eingang bildenden Wellenleiters (13) identisch sind.

**8.** Digitaler optischer Schalter nach Anspruch 6 oder 7,
**dadurch gekennzeichnet**, daß
der Modentaper (14) symmetrisch ausgebildet ist.

**9.** Digitaler optischer Schalter nach einem der Ansprüche 6 bis 8,
**dadurch gekennzeichnet**, daß
zwischen dem Modentaper (14) und der zentralen Region (4) ein Splittingtaper (17) angeordnet ist.

**Claims**

**1.** Digital optical switch, in which two asymmetric waveguides (2, 3, 5, 6) are arranged running at least closely adjacent over a short path length and are designed electro-optically controllable in a central region (4) as regards their adiabatic coupling and are provided with a grid arrangement (10) in the central region (4), which affects the waveguide eigenmodes, characterized in that the waveguides (2, 3, 5, 6), the electrodes (7) serving for electro-optical controllable adiabatic coupling and the grid arrangement (10), which affects the waveguides eigenmodes, are essentially shaped as one on top of each other arranged layers on a substrate.

**2.** Digital optical switch according to claim 1, characterized in that the grid arrangement (10), which affects the waveguide eigenmodes, is designed as an electro-optical, optionally controllable electrode structure.

**3.** Digital optical switch according to claim 2, characterized in that the electrode structure includes respectively four electrode strips (12) per period and at least one period.

**4.** Digital optical switch according to claim 1, characterized in that the grid arrangement (10), which affects the waveguide eigenmodes, is designed as a fixedly predetermined, digital surface structure (12) of that waveguide (2, 5) that is located above the other waveguides (3, 6).

**5.** Digital optical switch according to one of claims 1 - 4, characterized in that the waveguides (2, 3, 5, 6) outside the path length in which is located the grid arrangement (10), which affects the waveguide eigenmodes, have at least one section (11), which displaces the direction of their course parallel, acts as a phase shifter and has a length of $\lambda/4$.

7

**6.** Digital optical switch according to one of claims 1 - 5, characterized in that in a Y-structure consisting of three waveguide branches, the central region (4) is connected via a mode taper (14) with a passive waveguide (13) forming the single waveguide branch.

**7.** Digital optical switch according to claim 6, characterized in that the two waveguides (5, 6) forming the other waveguide branches of the Y-structure are provided at their ends forming the outputs with passive sections (15, 16) which are identical in their light conducting property with that of the passive single waveguide (13) which forms the input.

**8.** Digital optical switch according to claim 6 or 7, characterized in that the mode taper (14) is symmetrically designed.

**9.** Digital optical switch according to one of claims 6 - 8, characterized in that a splitting taper (17) is arranged between the mode taper (14) and the central region (4).

## Revendications

**1.** Commutateur optique numérique, dans lequel deux guides d'ondes asymétriques (2, 3, 5, 6), sont disposés sur un court trajet en s'étendant de façon au moins étroitement voisine et sont constitués dans une région centrale (4) de façon à pouvoir être commandés de manière optoélectronique en ce qui concerne leur accouplement adiabatique, et sont pourvus dans la région centrale (4) d'un agencement à grille (10) influençant les modes propres des guides d'ondes,
caractérisé en ce que
les guides d'ondes (2, 3, 5, 6), les électrodes (7) qui servent à leur accouplement adiabatique qui peut être commandé d'une manière opto-électronique et l'agencement à grille (10) qui influence les modes propres des guides d'ondes, sont constitués sur un substrat sous la forme de couches disposées sensiblement les unes au dessus des autres.

**2.** Commutateur optique numérique, selon la revendication 1,
caractérisé en ce que
l'agencement à grille (10) qui influence les modes propres des guides d'ondes, est conçu sous la forme d'une structure d'électrodes opto-électronique qui peut être commandée à volonté.

**3.** Commutateur optique numérique, selon la revendication 2,
caractérisé en ce que
la structure d'électrodes comprend respectivement quatre bandes d'électrodes (12) pour chaque période et au moins une période.

**4.** Commutateur optique numérique, selon la revendication 1,
caractérisé en ce que
l'agencement à grille (10) qui influence les modes propres des guides d'ondes, est constitué sous la forme d'une structure superficielle (12) numérique, prédéfinie de façon fixe de celui des guides d'ondes (2, 5) qui se trouve au dessus de l'autre guide d'ondes (3, 6).

**5.** Commutateur optique numérique, selon l'une des revendications 1 à 4,
caractérisé en ce que
les guides d'ondes (2, 3,.5, 6) présentent en dehors du trajet, dans lequel se trouve l'agencement à grille (10), qui influence les modes propres des guides d'ondes, au moins une section (11), décalant de façon parallèle la direction de son parcours, opérant comme déphaseur, avec une longueur de λ/4.

**6.** Commutateur optique numérique, selon l'une des revendications 1 à 5,
caractérisé en ce que
dans une structure en Y, consistant en trois branches de guides d'ondes, la région centrale (4) est reliée au moyen d'un adaptateur de mode (14) à un guide d'ondes (13) passif constituant la branche isolée du guide d'ondes.

**7.** Commutateur optique numérique, selon la revendication 6,
caractérisé en ce que
les deux guides d'ondes (5, 6) qui forment les autres branches de guides d'ondes de la structure en Y, sont pourvus à leurs extrémités qui forment les sorties, de sections passives (15, 16) qui sont identiques quant à leurs propriétés de guidage de la lumière à celles du guide d'ondes (13) passif, isolé qui constitue l'entrée.

8. Commutateur optique numérique, selon la revendication 6 ou 7, caractérisé en ce que l'adaptateur de mode (14) est constitué de façon symétrique.

9. Commutateur optique numérique, selon l'une des revendications 6 à 8, caractérisé en ce que entre l'adaptateur de mode (14) et la région centrale (4) on dispose un adaptateur dédoublé (17).

Fig.1

Fig.2

Fig.3

Fig.4

Fig.5

Fig.6